# EUROPEAN PATENT SPECIFICATION

(11) **EP 4 216 054 B1**
(45) Date of publication and mention of the grant of the patent: **12.11.2025**
(21) Application number: 23152453.9
(22) Date of filing: 19.01.2023
(51) Int. Cl.: G06F 8/65, G06F 11/14

(54) **UPGRADABLE ELECTRONIC DEVICE AND METHOD FOR UPGRADING ELECTRONIC DEVICE**
ERWEITERBARE ELEKTRONISCHE VORRICHTUNG UND VERFAHREN ZUR AKTUALISIERUNG EINER ELEKTRONISCHEN VORRICHTUNG
DISPOSITIF ÉLECTRONIQUE ÉVOLUTIF ET PROCÉDÉ DE MISE À NIVEAU DE DISPOSITIF ÉLECTRONIQUE

(30) Priority: 21.01.2022 KR 20220009501
(43) Date of publication of application: 26.07.2023
(73) Proprietor: LG Electronics Inc., Yeongdeungpo-Gu Seoul 07336 (KR)
(72) Inventor: Kim, Seunghyo, 08592 Seoul (KR); Lee, Hakrae, 08592 Seoul (KR)
(74) Representative: Ter Meer Steinmeister & Partner

(56) References cited:
- CN-A- 112 527 365
- US-A1- 2021 263 724

## Description

### BACKGROUND

### [Technical Field]

Embodiments of the present disclosure relate to an upgradable electronic device and a method for upgrading the electronic device.

### [Description of Reference Numerals]

An electronic device includes a controller that controls operations of the electronic device. The controller controls the electronic device through execution of a specific program to implement functions desired by users.

In general, after-sales service for electronic devices is limited to simple support, such as software debugging. Accordingly, a user who wants a new function needs to purchase a new electronic device. That is, an electronic device purchased by a user undergoes a significant decrease in residual value over time, which leads to user complaints.

Accordingly, many studies are being conducted on a method of improving existing functions of an electronic device or adding a new function to the electronic device through modification of the program, and some of such studies are being put into practice.

However, an error may occur during update of the program for the electronic device. This makes it impossible for the electronic device to operate normally. Therefore, there is a need for a solution to prepare for possible errors during upgrade of the electronic device.
US 2021/263724 A1 discloses an online upgrade control method for a home appliance system, and a home appliance system. when a software update is available for the home appliance system, the available software update of a functional component that needs to be updated is downloaded to a memory, and the original software of the functional component that needs to be updated is backed up to the memory.

### SUMMARY

It is an object of the present disclosure to provide an upgradable electronic device and a method for upgrading the electronic device, which can ensure normal operation of the electronic device even when an error occurs during upgrade of the electronic device.

It is an object of the present disclosure to provide an upgradable electronic device and a method for upgrading the electronic device, which can ensure reliable rollback when upgrade of the electronic device fails.

It is an object of the present disclosure to provide an upgradable electronic device and a method for upgrading the electronic device, which can ensure more rapid upgrade of the electronic device.

The above and other objects and advantages of the present disclosure will become apparent from the detailed description of the following embodiments in conjunction with the accompanying drawings. In addition, it will be readily understood that the objects and advantages of the present disclosure can be realized by features set forth in the appended claims or combinations thereof. One or more of these objects are solved by the features of the independent claims.
An electronic device and a method according to embodiments of the present disclosure may be configured to provide a rollback process in which a storage area for backup of existing program data is selected depending on the memory situation of a controller.

An electronic device and a method according to embodiments of the present disclosure may be configured to provide a rollback process in which existing program data is backed up to a built-in memory of a microcomputer when the existing program data has a size less than or equal to half of a memory space of the built-in memory of the microcomputer.

In accordance with one aspect of the present disclosure, there is provided an electronic device including: a main controller including a single-chip microcomputer including an internal memory and a processing unit; and a communication unit receiving upgrade data from outside the electronic device (e.g. from a server or management server), wherein, when existing program data stored in a first area of the internal memory has a size less than or equal to a reference size, the processing unit updates the existing program data stored in the first area based on the upgrade data after backing the existing program data up to a second area of the internal memory, the second area being different from the first area. The main controller may be configured to perform a method according to any one of the herein described aspects and embodiments.

In accordance with another aspect of the present disclosure, there is provided a method for upgrading an electronic device comprising a single-chip microcomputer including an internal memory and a processing unit, the method including: backing existing program data stored in a first area of the internal memory up to a second area of the internal memory different from the first area when the existing program data has a size less than or equal to a reference size; and updating the existing program stored in the first area based on upgrade data received from outside the electronic device (e.g. from a server or management server). The electronic device may be an electronic device according to any one of the herein described aspects and embodiments.

In accordance with another aspect of the present disclosure, there is provided a system for upgrading an electronic device, comprising: at least one electronic device including a single-chip microcomputer with an internal memory and a processing unit; and a management server configured to transmit upgrade data to the electronic device, wherein when existing program data stored in a first area of the internal memory of the electronic device has a size less than or equal to a reference size, the processing unit is configured to update the existing program data stored in the first area based on the upgrade data after backing the existing program data up to a second area of the internal memory, the second area being different from the first area. The system may further include a user terminal, such as a mobile phone for receiving a user input and/or for outputting information. The system may include at least one electronic device, e.g. an electronic device according to any one of the herein described aspects and embodiments. The electronic device to be upgraded may be one of the at least one electronic device. The management server and the electronic device may be wirelessly connected for unidirectional and/or bidirectional data exchange, e.g. via an access point. Here, a communication unit of the electronic device may be configured for receiving data for upgrade from the management server, i.e. from outside the electronic device. The system may further include a user terminal, e.g. a mobile terminal, for receiving user input.

The electronic device and/or the method and/or the system may include one or more of the following features:

The electronic device may be a home appliance, e.g. a laundry machine, an air conditioner, a washing machine, an air purifier, a steam closet, a styler, a refrigerator and a water purifier, and/or electronic device may be a mobile device, such as a smartphone, and/or an automotive electronic device (for example, a device for autonomous driving, a device for controlling vehicle operation).

The upgrade data may relate to or include to program or operation data. That is, the data for upgrade may be or include program data for controlling operations of the electronic device and/or parameter values used for controlling operations of the electronic device.

"The outside" may denote an entity or unit outside of the electronic device, e.g. connected thereto for data exchange, preferably via Wi-Fi or other wireless connection, or connected by LAN etc.. For example, "the outside" may be a management server.

The existing program data may include or be currently executed program data, i.e. data of a program currently executed by the electronic device, e.g. being executed at the time of receiving an upgrade start message and/or the upgrade data. The reference size may be set to 40% to 50% (for example, 50%) of the available area of the internal memory of the microcomputer. Here, the available area refers to the entire area of the internal memory excluding the boot sector.

The internal memory may be a nonvolatile memory. The second area may be an area of the internal memory excluding the boot sector and the first area. The first area may be located after a boot sector of the internal memory.

The reference size may be less than or equal to half of the entire area of the internal memory excluding a boot sector.

When the process of backing the existing program data stored in the first area up to the second area of the internal memory is unsuccessful and/or when the existing program data stored in the first area has a size exceeding the reference size, the processing unit may confirm that data backup has failed and/or may update the existing program data stored in the first area based on the upgrade data.

When the process of updating the existing program data stored in the first area is unsuccessful, the processing unit may perform data rollback based on the existing program data stored in the second area.

When the process of updating the existing program data stored in the first area is unsuccessful, the processing unit may wait in a boot mode, if or whether failure of data backup is confirmed or data rollback is unsuccessful.

the main controller may further include an external memory mounted on a board having the microcomputer mounted thereon.

When the existing program data stored in the first area has a size exceeding the reference size, the processing unit may update the existing program data stored in the first area after backing the existing program data up to the external memory.

When the process of backing the existing program data stored in the first area up to the second area is unsuccessful, the processing unit may update the existing program data stored in the first area after backing the existing program data up to the external memory.

When the process of backing the existing program data stored in the first area up to the external memory is unsuccessful, the processing unit may confirm that data backup has failed and/or may upgrade the existing program data stored in the first area based on the upgrade data.

When the process of updating the existing program data stored in the first area is unsuccessful, the processing unit may perform data rollback based on the existing program data stored in the external memory.

When the process of updating the existing program data stored in the first area is unsuccessful, the processing unit may wait in a boot mode, if or whether failure of data backup is confirmed or data rollback is unsuccessful.

The method for upgrading the electronic device may further include: confirming that data backup has failed when the step of backing the existing program data stored in the first area up to the second area of the internal memory is unsuccessful and/or when the existing program data stored in the first area has a size exceeding the reference size. Further, the method may include updating the existing program data stored in the first area based on the upgrade data.

The method may further include: performing data rollback based on the existing program data stored in the second area when the step of updating the existing program data (e.g. the existing program data stored in the first area) is unsuccessful.

The method may further include: when the step of updating the existing program data stored in the first area is unsuccessful, waiting in a boot mode, if failure of data backup is confirmed or data rollback is unsuccessful.

The method may further include: backing the existing program data stored in the first area up to an external memory mounted on a board having the microcomputer mounted thereon when the existing program data stored in the first area has a size exceeding the reference size. The method may further include updating the existing program data stored in the first area.

The method may further include: backing the existing program data stored in the first area up to an external memory mounted on a board having the microcomputer mounted thereon when the step of backing the existing program data up to the second area is unsuccessful.

The method may further include: performing data rollback based on the existing program data stored in the external memory when the step of updating the existing program data is unsuccessful.

The apparatus and the method according to embodiments of the present disclosure can ensure easy and efficient upgrade of electronic devices.

The apparatus and the method according to embodiments of the present disclosure can ensure normal operation of an electronic device even when an error occurs during upgrade of the electronic device.

The apparatus and the method according to embodiments of the present disclosure can ensure reliable rollback when upgrade of an electronic device fails.

The apparatus and the method according to embodiments of the present disclosure can ensure more rapid upgrade of an electronic device.

The above and other effects of the present disclosure will become apparent from the following detailed description of the present disclosure.

### Description of Drawings

FIG. 1 is a schematic block diagram of a system for upgrading electronic devices according to one embodiment of the present disclosure.
FIG. 2 is a schematic block diagram of a system for upgrading electronic devices according to one embodiment of the present disclosure, illustrating a user device of FIG. 1 in more detail.
FIG. 3 is a schematic block diagram of a management server for upgrading electronic devices according to one embodiment of the present disclosure.
FIG. 4 is a flowchart of operations performed by a management server according to one embodiment of the present disclosure.
FIG. 5 is a schematic block diagram of an upgradable electronic device according to one embodiment of the present disclosure.
FIG. 6 is a schematic block diagram of an upgradeable split-type home appliance including multiple individual units according to one embodiment of the present disclosure.
FIG. 7 to FIG. 9 are flowcharts of operations performed by the electronic device according to respective embodiments of the present disclosure.
FIG. 10 to FIG. 13 are flow diagrams illustrating the overall operation of a method for upgrading home appliances according to respective embodiments of the present disclosure.

### DETAILED DESCRIPTION

The above and other objects, features, and advantages of the present disclosure will become apparent from the detailed description of the following embodiments in conjunction with the accompanying drawings. Description of known functions and constructions which may unnecessarily obscure the subject matter of the present disclosure will be omitted. Like components will be denoted by like reference numerals throughout the specification.

It will be understood that, although the terms "first", "second", and the like may be used herein to describe various elements and the like, these elements should not be limited by these terms. These terms are only used to distinguish one element from another element. Thus, unless stated otherwise, a first element discussed below could be termed a second element, or vice versa, without departing from the scope of the present disclosure.

In addition, when a component is referred to as being "connected to", "coupled to" or "joined to" another component, these components may be connected, coupled, or joined to each other directly or through another component, or intervening component(s) may be "interposed" therebetween.

Throughout the specification, unless stated otherwise, each element may be singular or plural in number.

As used herein, the singular forms "a", "an", and "the" are intended to include the plural forms as well, unless the context clearly indicates otherwise. Moreover, the terms "comprises", "comprising", "includes" and/or "including" when used in this specification, should not be construed to mean that a process, method, article, or apparatus comprising a list of elements or steps necessarily comprises all the elements or all the steps. Thus, such a process, method, article, or apparatus may be free from some of the elements or the steps, or may further include one or more other elements or steps.

Throughout the specification, the expression "A and/or B" means A, B, or A and B, unless stated otherwise, and the expression "C to D" means "greater than or equal to C and less than or equal to D", unless stated otherwise.

Hereinafter, an upgradable home appliance, a management server for upgrading the home appliance, and a method for upgrading the home appliance according to some embodiments of the present disclosure will be described.

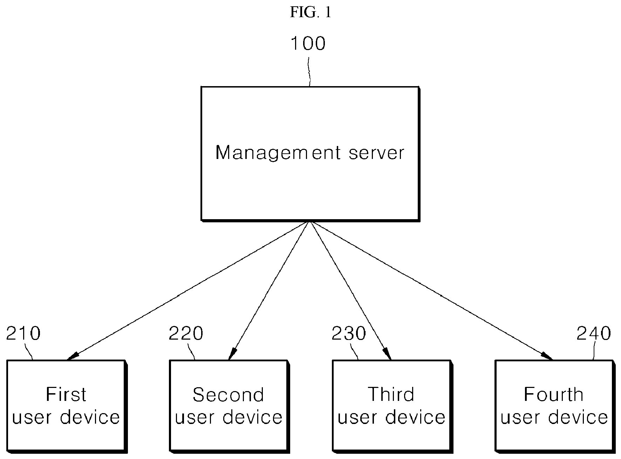

FIG. 1 is a schematic block diagram of a system for upgrading electronic devices according to one embodiment of the present disclosure. The system according to this embodiment may include a management server 100 and multiple user devices 210, 220, 230, 240.

The management server 100 may store information about electronic devices to be upgraded and information about electronic devices owned by each user.

The information about electronic devices to be upgraded may include program data for a most recent version of each electronic device to be upgraded. In some embodiments, the information about electronic devices to be upgraded may further include at least one of an identifier of each electronic device to be upgraded, program data for each previous version of the electronic device, and delta data derived from comparison between the program data for each previous version of the electronic device and the program data for the most recent version of the electronic device. Herein, program data is data related to operation of the electronic device, and refers to data that can improve functions of the electronic device or add new functions to the electronic device. For example, when the electronic device is an air conditioner, program data may be data for improving a program for adjusting at least one of air volume, airflow direction, and indoor temperature, may be data for improving images displayed on a display module or for displaying a new image, or may be data related to voice information provided by a voice information module.

The information about electronic devices owned by each user may include a user identifier and an identifier of an electronic device associated with the user identifier.

The management server 100 may determine whether to upgrade a corresponding electronic device and what upgrade method to use based on information about the electronic device. Details thereof will be described below.

In addition, the management server 100 may transmit data for upgrading each of the user devices 210, 220, 230, 240 (hereinafter, "upgrade data"). The upgrade data may include program data for a most recent version of a corresponding electronic device and/or delta data as described above. In some embodiments, the data transmitted by the management server 100 may further include a set of instructions that need to be executed by each of the user devices 210, 220, 230, 240. The management server 100 may determine what type of upgrade data to transmit or when to transmit the upgrade data based on determination as to whether to upgrade the corresponding electronic device and what upgrade method to use.

Each of the multiple user devices 210, 220, 230, 240 may include at least one electronic device. Here, the electronic device may include a variety of electronic devices, including a variety of home appliances, such as an air conditioner, an air purifier, a refrigerator, a washing machine, a steam closet, and a water purifier, mobile devices, such as a smartphone, and a variety of automotive electronic devices (for example, a device for autonomous driving, a device for controlling vehicle operation, and the like).

In addition, each of the multiple user devices 210, 220, 230, 240 may include at least one user terminal. The at least one electronic device may update program data in response to a file received from the management server 100 (that is, a file including the delta data and/or the set of instructions).

In the following description, a home appliance will be used as an example of an electronic device to be upgraded. However, it will be understood that the present disclosure is not limited thereto.

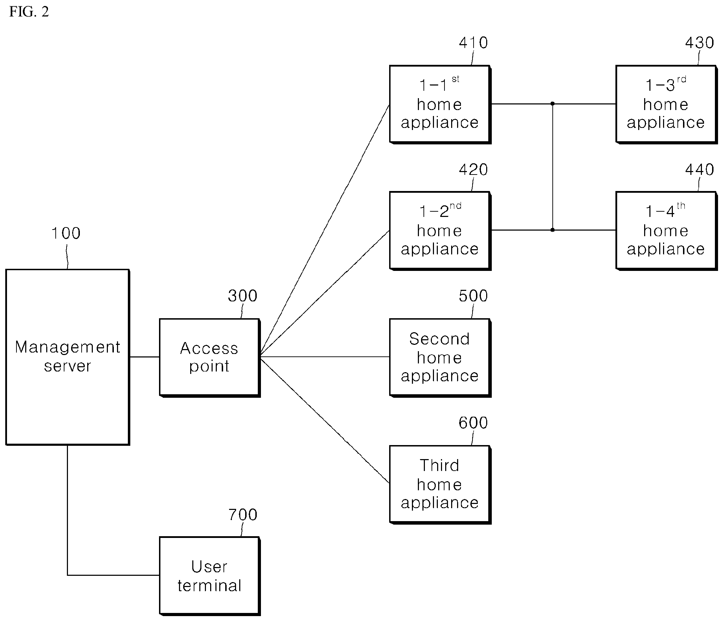

FIG. 2 is a schematic block diagram of a system for upgrading electronic devices according to one embodiment of the present disclosure, illustrating the user device of FIG. 1 in more detail. The system according to this embodiment may include a management server 100, an access point 300, multiple home appliances 410, 420, 430, 440, 500, 600, and a user terminal 700. That is, each of the multiple user devices 210, 220, 230, 240 of FIG. 1 may include at least one of the access point 300, the multiple home appliances 410, 420, 430, 440, 500, 600, and the user terminal 700.

The management server 100 may have the same functions as described in FIG. 1.

The access point 300 may serve to relay communication between the management server 100 and the home appliances 410, 420, 500, 600. The access point 300 may be a Wi-Fi router.

Each of the multiple home appliances 410, 420, 430, 440, 500, 600 may perform a unique function through execution of a corresponding program.

The home appliances 410, 420, 430, 440 may be individual units of a split-type home appliance, wherein the individual units each have a predetermined function and are connected to one another. For example, a 1-1^{st} home appliance 410, a 1-2^{nd} home appliance 420, and a 1-3^{rd} home appliance 430 may be indoor units of an air conditioner, each of which controls one of indoor temperature, humidity, and air quality, and a 1-4^{th} home appliance 440 may be an outdoor unit of the air conditioner, which is connected to the indoor units. Here, indoor air quality may include the concentration of fine dust and/or the concentration of chemicals that cause odors and the like. In addition, the 1-1^{st} home appliance 410 and the 1-2^{nd} home appliance 420 may include a communication module (for example, a Wi-Fi module) for connection to the access point 300. In addition, the 1-1^{st} home appliance 410, the 1-2^{nd} home appliance 420, the 1-3^{rd} home appliance 430, and the 1-4^{th} home appliance 440 may include a communication module for intercommunication. Each of the 1-1^{st} home appliance 410, the 1-2^{nd} home appliance 420, and the 1-3^{rd} home appliance 430 may control at least one of indoor air temperature, humidity, and fine dust concentration through execution of a corresponding program. The 1-4^{th} home appliance 440 may control operation of at least one of a compressor and a fan through execution of a corresponding program.

Each of the second home appliance 500 and the third home appliance 600 may be an independent home appliance. For example, each of the second home appliance 500 and the third home appliance 600 may be one of various home appliances such as a washing machine, an air purifier, a steam closet, and a refrigerator. Each of the second home appliance 500 and the third home appliance 600 may include a communication module (for example, a Wi-Fi module).

The user terminal 700 may be a mobile terminal of a user who owns the multiple home appliances 410, 420, 430, 440, 500, 600.

In some embodiments, the access point 300 may be omitted. In this case, each of the home appliances 410, 420, 500, 600 may access the management server 100 via the Internet or the like. In this case, each of the home appliances 410, 420, 500, 600 may access the management server 100 via wired and/or wireless and/or electronic connection.

Although not shown, in one embodiment, the user device may further include a remote controller capable of controlling each of the multiple home appliances 410, 420, 430, 440, 500, 600. The remote control may transmit/receive data to/from a corresponding home appliance via near-field wireless communication. For example, the remote controller may transmit/receive data to/from a corresponding home appliance via Bluetooth. In one embodiment, besides the multiple home appliances 410, 420, 430, 440, 500, 600, the remote controller or other devices connected to the multiple home appliances may also be upgraded.

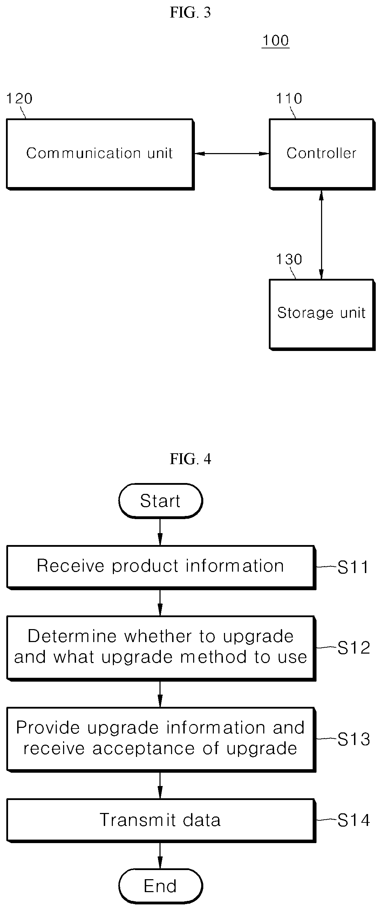

FIG. 3 is a schematic block diagram of a management server for upgrading electronic devices according to one embodiment of the present disclosure. The management server 100 may include a controller 110, a communication unit 120, and a storage unit 130.

The controller 110 may transmit program data stored in the storage unit 130. Here, the program data transmitted by the controller 110 may be program data for a most recent version of a corresponding home appliance. In some embodiments, the controller 110 may generate home appliance-specific delta data based on data stored in the storage unit 130 and may transmit the delta data to home appliances 410, 420, 500, 600 (see FIG. 2) through the communication unit 120. In addition to the program data and/or the delta data, the controller 110 may transmit a set of instructions to be executed by a controller of each of the home appliances 410, 420, 500, 600 (see FIG. 2).

In addition, the controller 110 may determine whether to upgrade a corresponding home appliance and what upgrade method to use based on information about the home appliance.

The controller 110 may include at least one processing unit and/or a memory. Here, the processing unit may include, for example, a central processing unit (CPU), a graphics processing unit (GPU), a microprocessor, an application-specific integrated circuit (ASIC), and a field-programmable gate array (FPGA), and may have multiple cores. The memory may be a volatile memory (for example, RAM and the like), a nonvolatile memory (for example, ROM, flash memory, and the like), or a combination thereof.

The communication unit 120 may transmit signals outside the management server under the control of the controller 110. In addition, the communication unit 120 may receive signals from outside the management server and may transmit the received signals to the controller 110. The communication unit 120 may transmit/receive signals via wired and/or electronic connection. The communication unit 120 may include a modem, a network interface card (NIC), an integrated network interface, a radio frequency transmitter/receiver, an infrared port, a USB port, or any other interface for communication with other computing devices.

Under the control of the controller 110, the storage unit 130 may store data received through the communication unit 120 and/or data processed by the controller 110. For example, the storage unit 130 may store at least one of a user identifier, an identifier of a home appliance associated with the user identifier, program data for each version of the home appliance, and delta data derived from comparison between program data for each previous version of the home appliance and program data for a most recent version of the home appliance.

FIG. 4 is a flowchart of operations performed by the management server 100 according to one embodiment of the present disclosure. Each step shown in FIG. 4 may be performed by the controller 110 of the management server 100.

First, the management server 100 may receive product information from a corresponding home appliance (step S11). The product information may include at least one of a user identifier, a home appliance identifier, and a current version of a program for the home appliance.

Then, the management server 100 may determine whether to upgrade the home appliance and/or what upgrade method to use based on the product information (step S12).

For example, the management server 100 may determine whether to upgrade the home appliance by ascertaining user rights and/or services that a user uses using the user identifier. Alternatively, the management server 100 may determine whether to upgrade the home appliance based on the home appliance identifier. Alternatively, the management server 100 may determine whether to upgrade the home appliance by ascertaining whether the current version of the program for the home appliance is the most recent version or not.

In addition, the management server 100 may determine what upgrade method to use based on at least one of functions to be upgraded, size of upgrade data, format of the upgrade data, estimated transmission time of the upgrade data, and the home appliance identifier. For example, the management server 100 may determine an appropriate upgrade method depending on the functions to be upgraded. Alternatively, the management server 100 may determine what upgrade method to use by comparing the size of the upgrade data with at least one reference size. Alternatively, the management server 100 may determine what upgrade method to use according to whether the upgrade data includes instructions. Alternatively, the management server 100 may determine what upgrade method to use by identifying the type of home appliance to be upgraded or connectivity of a communication unit of the corresponding home appliance using the home appliance identifier. Alternatively, the management server 100 may determine what upgrade method to use by ascertaining how long it takes to transmit the upgrade data based on the size of the upgrade data and the home appliance identifier.

According to one embodiment of the present disclosure, upgrade methods may include, for example, at least one of: a general upgrade in which the entirety of data including a program executing functions to be upgraded is transmitted to a corresponding home appliance and then the home appliance is upgraded based on the entirety of the transmitted data; a delta upgrade in which delta data as described above is transmitted to a corresponding home appliance and then the home appliance is upgraded based on the delta data; and an automatic upgrade in which the upgrade data is transmitted to a corresponding home appliance before receipt of an acceptance of upgrade from a user and then the home appliance is upgraded upon the user accepting upgrade.

According to the general upgrade and the delta upgrade, the management server 100 may transmit the upgrade data after receiving an acceptance of upgrade from a user. In addition, according to the general upgrade and the delta upgrade, the upgrade data may be transmitted to the home appliance (more specifically, a functional module of the home appliance) after a unique operation of the home appliance is stopped.

Herein, the unique operation of the home appliance refers to an operation that the home appliance performs to provide an original function thereof. For example, for an air conditioner, an operation of controlling a compressor or a fan to perform cooling or heating may be the unique operation. For a washing machine, an operation of controlling a motor or a valve to wash laundry may be the unique operation. For a refrigerator, an operation of controlling a compressor or a fan to adjust or maintain the internal temperature may be the unique operation.

According to the automatic upgrade, the upgrade data may be transmitted to the home appliance (more specifically, a functional module of the home appliance) regardless of whether the unique operation of the home appliance is stopped or not. That is, according to the automatic upgrade, some or all of the upgrade data may be transmitted to the home appliance (more specifically, a functional module of the home appliance) while the home appliance performs the unique operation.

In one embodiment of the present disclosure, the management server 100 may determine the automatic upgrade as an appropriate upgrade method if the upgrade data has a size greater than or equal to a first reference size. And/or, the management server 100 may determine the delta upgrade as an appropriate upgrade method if the upgrade data has a size less than the first reference size. And/or, the management server 100 may determine the general upgrade as an appropriate upgrade method if the upgrade data has a size less than a second reference size smaller than the first reference size. The first reference size may be 1 MB. The second reference size may be 128 kB. This is because, if the upgrade data has a size greater than the first reference size, it takes a lot of time to complete data transmission even when the delta upgrade is employed. This is also because, if the upgrade data has a size less than the second reference size, it does not take much time to complete data transmission even when the delta upgrade is not employed.

Alternatively, in one embodiment of the present disclosure, the management server 100 may determine the automatic upgrade as an appropriate upgrade method if an estimated transmission time of the upgrade data is longer than or equal to a first reference time. And/or, the management server 100 may determine the delta upgrade as an appropriate upgrade method if an estimated transmission time of the upgrade data is less than the first reference time. And/or, the management server 100 may determine the general upgrade as an appropriate upgrade method if an estimated transmission time of the upgrade data is less than a second reference time shorter than the first reference time. The first reference time may be 20 minutes. The second reference time may be 2 minutes.

Alternatively, in one embodiment of the present disclosure, the management server 100 may determine the general upgrade or the delta upgrade as an appropriate upgrade method if traffic on a communication line used by a home appliance to be upgraded and/or a functional module of the home appliance is greater than or equal to a reference rate with respect to the capacity of the communication line. And/or, the management server 100 may determine the automatic upgrade as an appropriated upgrade method if the traffic on the communication line used by the home appliance to be upgraded and/or the functional module of the home appliance is less than the reference rate with respect to the capacity of the communication line. This is because, if the traffic on the communication line is greater than usual, it takes a lot of time to transmit the upgrade data even when the automatic upgrade is employed.

Alternatively, in one embodiment of the present disclosure, the management server 100 may determine the automatic upgrade as an appropriate upgrade method if the upgrade data does not include instructions.

The management server 100 may determine what upgrade method to use by considering at least two of the aforementioned criteria in combination.

Then, the management server 100 may provide upgrade information to the home appliance and/or the user terminal 700 and then may receive an acceptance of upgrade from the home appliance and/or the user terminal 700 (step S13). In addition, the management server 100 may transmit the upgrade data to the home appliance (step S14).

The order of steps S13 to S14 may be changed. That is, when the general upgrade or the delta upgrade is employed, the management server 100 may perform step S14 after step S13. In addition, when the automatic upgrade is employed, the management server 100 may perform step S13 before step S14.

Then, the management server 100 may request the home appliance to execute an upgrade operation.

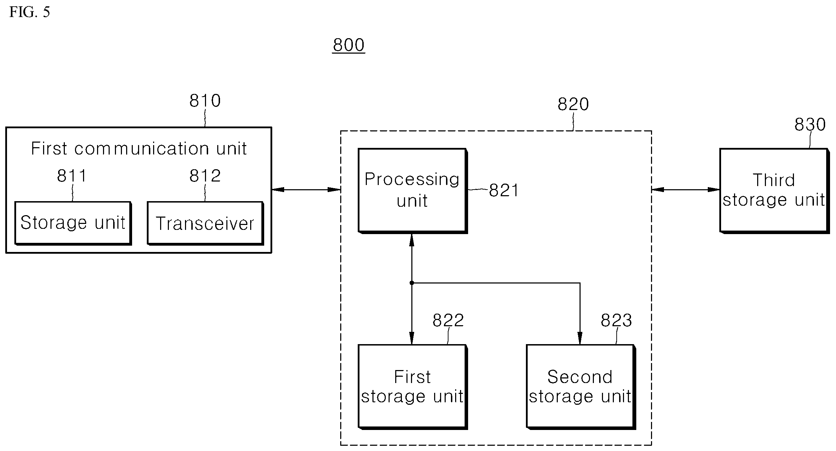

FIG. 5 is a schematic block diagram of an upgradable electronic device according to one embodiment of the present disclosure. The electronic device according to this embodiment may include a first communication unit 810, a controller 820, and a third storage unit 830. The first communication unit 810 may include a storage unit 811 and a transceiver 812 and the controller 820 may include a processing unit 821, a first storage unit 822, and a second storage unit 823. Each of the home appliances 410, 420, 500, 600 (see FIG. 2) may include the components shown in FIG. 5. In some embodiments, some of the first storage unit 822, the second storage unit 823, and the third storage unit 830 may be omitted from the electronic device according to this embodiment.

The first communication unit 810 may receive data from the management server 100 (see FIG. 1 or FIG. 2) and may transmit the received data to the controller 820. The data received from the management server 100 (see FIG. 1 or FIG. 2) may include at least one of program data, delta data as described above, and an instruction to be executed by the controller 820. The first communication unit 810 may include a radio frequency transmitter/receiver, an infrared port, a USB port, or any other interface. For example, the first communication unit 810 may include a near-field communication module that transmits/receives signals according to a communication protocol such as Wi-Fi or Bluetooth.

The storage unit 811 may store data received from the management server 100 (see FIG. 1 or FIG. 2). The storage unit 811 may be a nonvolatile memory. For example, the storage unit 811 may be a flash memory.

The transceiver 812 may transmit data stored in the storage unit 811 to the controller 820.

The controller 820 may store a program for implementing functions of a corresponding home appliance, and may execute the stored program to cause the home appliance to perform a specific function. In addition, the controller 820 may update the stored program in response to data received from the communication unit 810.

The processing unit 821 may include a central processing unit (CPU), a graphics processing unit (GPU), a microprocessor, an application-specific integrated circuit (ASIC), a field-programmable gate array (FPGA), and the like, and may have multiple cores.

The first storage unit 822 may be a nonvolatile memory. For example, the first storage unit 822 may be a flash memory. The first storage unit 822 may store the program described above.

The second storage unit 823 may be a volatile memory. For example, the second storage unit 823 may be a RAM. A portion of program data stored in the first storage unit 822 may be loaded into the second storage unit 823, and the program data stored in the second storage unit 823 may be written to a specific area of the first storage unit 822.

The third storage unit 830 may be a nonvolatile memory. The third storage unit may be one selected from among a flash memory, a magnetic storage, and an optical storage. The program for implementing functions of the home appliance may also be stored in the third storage unit 830.

The processing unit 821, the first storage unit 822, and the second storage unit 823 may be implemented by a single chip. That is, the controller 820 may include a single-chip microcomputer including the processing unit 821 and an internal memory. The internal memory may include the first storage unit 822 and/or the second storage unit 823.

The controller 820 and the third storage unit 830 may be mounted on the same board. Here, the first communication unit 810 may also be mounted on the same board as the controller 820 and the third storage unit 830.

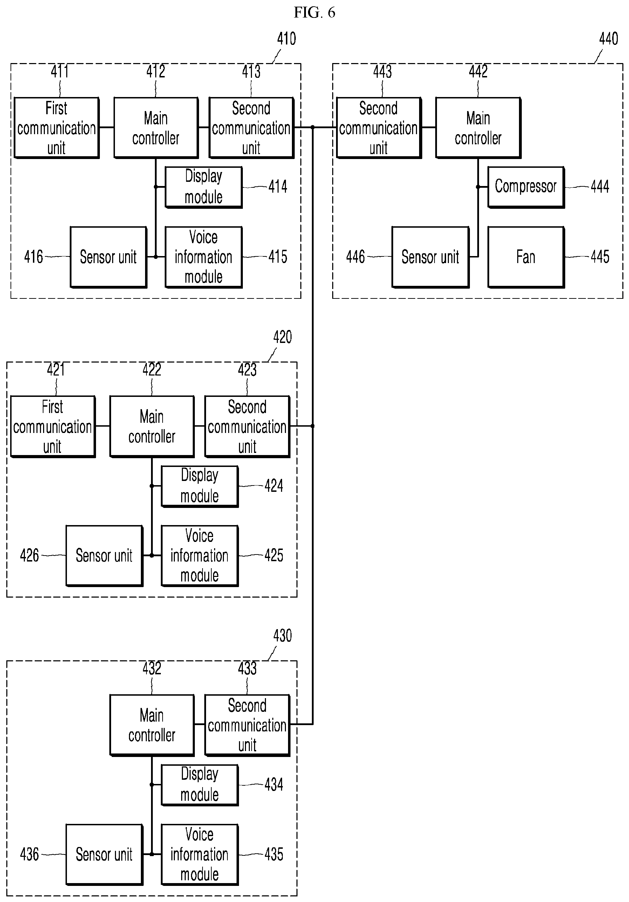

FIG. 6 is a schematic block diagram of an upgradeable split-type home appliance including multiple individual units according to one embodiment of the present disclosure. As described above, a 1-1^{st} home appliance 410, a 1-2^{nd} home appliance 420, and a 1-3^{rd} home appliance 430 may be indoor units of an air conditioner, and a 1-4^{th} home appliance 440 may be an outdoor unit of the air conditioner. In addition, as described in FIG. 2, the 1-1^{st} home appliance 410 and the 1-2^{nd} home appliance 420 may access the management server 100 via the access point 300 and/or the Internet.

The 1-1^{st} home appliance 410 may include a first communication unit 411, a main controller 412, and a second communication unit 413. In some embodiments, the 1-1^{st} home appliance 410 may further include at least one of a display module 414, a voice information module 415, and a sensor unit 416.

The first communication unit 411 may receive data from a management server 100 (see FIG. 1 and FIG. 2) and may transmit the received data to the main controller 412. The first communication unit 411 may have the same configuration as the first communication unit 810 of FIG. 5 and may perform the same functions as the first communication unit 810.

The main controller 412 may receive data from the first communication unit 411 and may transmit the received data to the second communication unit 413. When the data received from the first communication unit 411 is data used in the display module 414 and/or the voice information module 415, the main controller 412 may also transmit the data to the display module 414 and/or the voice information module 415. The main controller 412 may have the same configuration as the controller 820 of FIG. 5 and may perform the same functions as the controller 820. In some embodiments, the main controller 412 may further include the third storage unit 830 of FIG. 4.

When the 1-1^{st} home appliance 410 is an indoor unit of an air conditioner, the main controller 412 may control the overall operation of the indoor unit of the air conditioner. For example, the main controller 412 may control the speed or direction of air discharged from the indoor unit according to settings prescribed by a user (for example, a target temperature, air speed, mode, or the like). To this end, the main controller 412 may control a fan motor inside the indoor unit and/or a motor for adjusting the angle of vanes adapted to adjust the direction of the discharged air. In order to implement such an operation, a relatively large-sized program may be required. Accordingly, the main controller 412 may include a microcomputer including an internal memory and an external memory separate from the microcomputer. The internal memory of the microcomputer may include a volatile memory and/or a nonvolatile memory. The external memory may generally be a nonvolatile memory.

The second communication unit 413 may transmit/receive data to/from at least one of the 1-2^{nd} home appliance 420, the 1-3^{rd} home appliance 430, and the 1-4^{th} home appliance 440. The second communication unit 413 may transmit/receive data via asynchronous serial communication. Asynchronous serial communication allows straightforward implementation of hardware of a corresponding home appliance. In addition, the second communication unit 413 may transmit/receive data at a rate of 4,800 bps to 4 Mbps. Preferably, the second communication unit 413 transmits/receives data at a rate of 9,600 bps. As described above, the 1-1^{st} home appliance 410 may be an indoor unit of an air conditioner, and the 1-4^{th} home appliance 440 may be an outdoor unit of the air conditioner. Considering the distance between indoor and outdoor units of an air conditioner in a typical installation environment and surroundings thereof, the communication speed within the above range can ensure reliable communication while shortening the time required for data transmission. For example, the second communication unit 413 may include a universal asynchronous receiver/transmitter (UART), and may transmit/receive data via RS485 communication. The second communication unit 413 may include a buffer to temporarily store data.

The display module 414 may visually display various types of information for user convenience. For example, the display module 414 may display at least one of information related to operation of a corresponding home appliance, information related to the condition of the home appliance, and other daily life-related information. The display module 414 may be operated under the control of the main controller 412, or may include a separate display controller. Predetermined data may be transmitted from the management server to drive the display module 414. The display module 414 may receive the data via the main controller 412.

The voice information module 415 may provide various types of voice information for user convenience. Similar to the display module 414, the voice information module 415 may provide at least one of voice information related to operation of a corresponding home appliance, voice information related to the condition of the home appliance, and other daily life-related voice information. The voice information module 415 may be operated under the control of the main controller 412, or may include a separate voice controller. Predetermined data may be transmitted from the management server to drive the voice information module 415. The voice information module 415 may receive the data via the main controller 412.

The sensor unit 416 may acquire information related to operation of a corresponding home appliance. For example, when the home appliance is an air conditioner, the sensor unit 416 may detect at least one of indoor temperature, the temperature of air discharged from the air conditioner, indoor humidity, and the temperature and/or pressure of a circulating refrigerant. The sensor unit 416 may include at least one sensor.

The 1-2^{nd} home appliance 420 may have substantially the same configuration as the 1-1^{st} home appliance 410. That is, a first communication unit 421, a main controller 422, a second communication unit 423, a display module 424, a voice information module 425, and a sensor unit 426 may be substantially the same as the first communication unit 411, the main controller 412, the second communication unit 413, the display module 414, the voice information module 415, and the sensor unit 416, respectively.

The 1-3^{rd} home appliance 430 may be substantially the same as the 1-1^{st} home appliance except that the first communication unit described above is omitted therefrom. That is, a main controller 432, a second communication unit 433, a display module 434, a voice information module 435, and a sensor unit 436 may be substantially the same as the main controller 412, the second communication unit 413, the display module 414, the voice information module 415, and the sensor unit 416, respectively.

A main controller 442 and a second communication unit 443 of the 1-4^{th} home appliance 440 may be substantially the same as the main controller 412 and the second communication unit 413 of the 1-1^{st} home appliance 410, respectively. As described above, the 1-4^{th} home appliance 440 may be an outdoor unit of an air conditioner. In this case, the 1-4^{th} home appliance 440 may further include a compressor 444, a fan 445, and the like. The main controller 442 may control the compressor 444 and/or the fan 445 using a program contained in data received from the 1-1^{st} home appliance 410. The 1-4^{th} home appliance 440 may also include a sensor unit 446 that acquires information related to operation of a corresponding home appliance. When the 1-4^{th} home appliance 440 is an outdoor unit of an air conditioner, the sensor unit 446 may detect at least one of the pressure or temperature of a refrigerant, outdoor temperature, and outdoor humidity. The sensor unit 446 may include at least one sensor.

When the 1-4^{th} home appliance 440 is an outdoor unit of an air conditioner, the main controller 442 may control a cycle implemented by a compressor and a vaporizer. That is, the main controller 442 may control various valves through calculation of the operating frequency of the compressor 444 and the rpm of a fan motor driving the fan 445 based on readings received from the sensor unit 446 and/or settings prescribed by a user. In order to implement these functions, a relatively large-sized program is required. Accordingly, the main controller 442 may include a microcomputer including a processing unit and an internal memory and an external memory separate from the microcomputer. The internal memory may include a volatile memory and/or a nonvolatile memory.

Although not shown, the 1-4^{th} home appliances 440 may further include a compressor controller that controls the compressor and/or a motor controller that controls the fan motor. The compressor controller may control the compressor to operate at an operating frequency input from the main controller 442. The motor controller unit may control the fan motor to operate at an rpm input from the main controller 442. Each of the compressor controller and the motor controller may include a microcomputer including a processing unit and an internal memory. In addition, a program for implementing the operations of the compressor controller and the motor controller unit may have a relatively small size. Accordingly, the compressor controller and the motor controller may not include an external memory.

Although an air conditioner including one outdoor unit and three indoor units connected to the outdoor unit is illustrated as an example of an electronic device to be upgraded in FIG. 2 and FIG. 6, the number of indoor units connected to one outdoor unit (for example, the 1-4^{th} home appliance 440) may be adjusted as needed. For example, for an air conditioner used in a large building, dozens or more of indoor units may be connected to one outdoor unit.

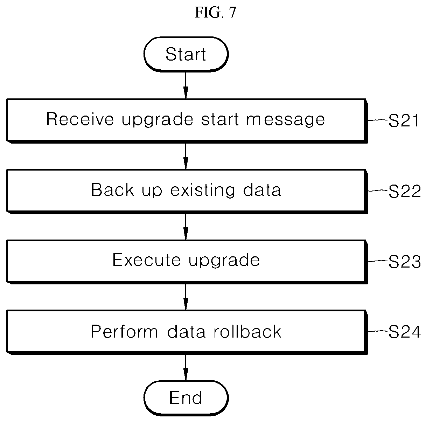

FIG. 7 is a flowchart of operations performed by the electronic device according to one embodiment of the present disclosure. Each step shown in FIG. 7 may be performed by a corresponding one of the main controllers 412, 422, 432, 442 of FIG. 6 (more specifically, the processing unit 821 if the main controllers have the same configuration as the controller 820 of FIG. 5).

First, an upgrade start message that notifies of upgrade start may be received from the first communication unit 810 or 411 (see FIG. 5 or FIG. 6) (step S21). If the 1-4^{th} home appliance is to be upgraded, the upgrade start message may be delivered to the main controller 442 (see FIG. 6) through the main controller 412 (see FIG. 6), the second communication unit 413 (see FIG. 6), and the second communication unit 443 (see FIG. 6).

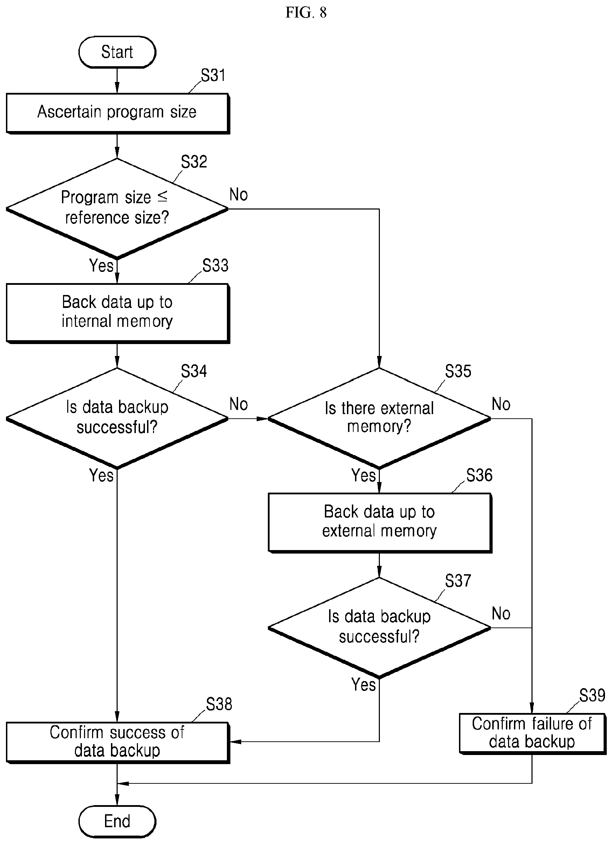

Then, a backup of existing program data (that is, currently executed program data) may be made (step S22). Here, the existing program data may be backed up to a nonvolatile memory inside a microcomputer or to a nonvolatile memory separate from the microcomputer. For example, the existing program data may be stored in a first area of the internal memory of the microcomputer. In this case, the program data that is stored in the first area in step S22 may be copied into a second area of the internal memory of the microcomputer or into an external memory outside the microcomputer. Details of step S22 will be described below with reference to FIG. 8.

Then, upgrade may be executed (step S23). That is, the program data stored in the first area of the internal memory of the microcomputer may be updated based on upgrade data received from outside the electronic device.

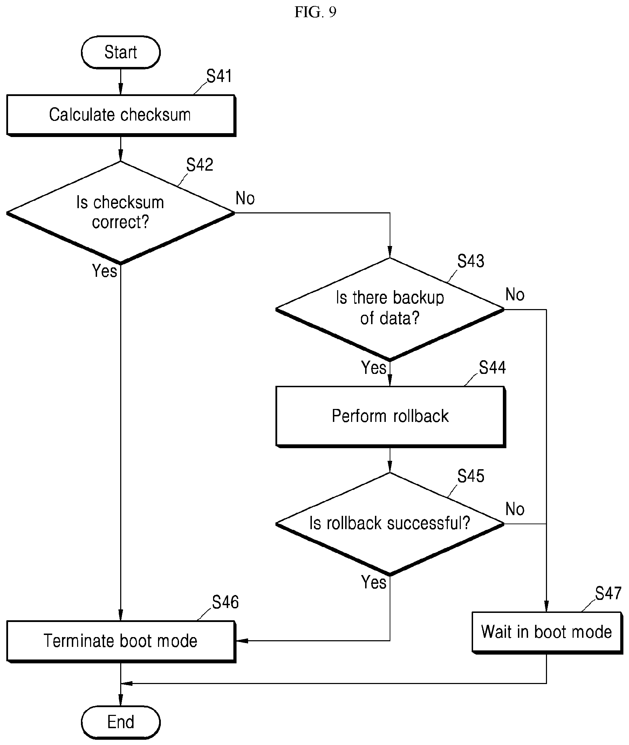

Then, a determination may be made as to whether data rollback is needed or not, and data rollback may be performed depending on the determination result (step S24). Details of step S24 will be described later with reference to FIG. 9.

FIG. 8 is a flowchart of operations performed by the electronic device according to one embodiment of the present disclosure, illustrating an exemplary embodiment of the step of making a backup of existing program data (step S22 of FIG. 7). Each step shown in FIG. 8 may be performed by a corresponding one of the main controllers 412, 422, 432, 442 of FIG. 6 (more specifically, the processing unit 821 if the main controllers have the same configuration as the controller 820 of FIG. 5 (or the controller 820 and the third storage unit 830)).

As described above, the main controllers 412, 422, 432, 442 (see FIG. 6) may have the same configuration as the controller 820 of FIG. 5 (or the controller 820 and the third storage unit 830 of FIG. 5). That is, each of the main controllers 412, 422, 432, 442 (see FIG. 6) may include a single-chip microcomputer including a processing unit and an internal memory. The internal memory may be a nonvolatile memory.

First, the size of currently stored program data is ascertained (step S31). For example, the size of the program data may be ascertained by writing specific data to an end of an execution file of the program data and identifying an address where the specific data is written. Here, the program data may be stored in a first area of an internal memory of a microcomputer (for example, the second storage unit 823 of FIG. 5). The first area may be located right after a boot sector of the internal memory. That is, the program data may be written from an address right after the boot sector of the internal memory of the microcomputer. Alternatively, the size of the program data may be ascertained by storing a start address of the program data and an end address of the program data in a specific area of a memory, followed by reading the memory.

Then, a determination is made as to whether the size of the currently stored program data (that is, existing program data) is less than or equal to a reference size (step S32). The reference size is less than or equal to half of an available area of the internal memory of the microcomputer. More specifically, the reference size may be set to 40% to 50% (for example, 50%) of the available area of the internal memory of the microcomputer. Here, the available area refers to the entire area of the internal memory excluding the boot sector. In step S32, the processing unit determines whether the size of the existing program data currently stored in the internal memory is less than or equal to half of the entire area of the internal memory excluding the boot sector.

When a determination is made in step S32 that the size of the existing program data is less than or equal to the reference size, the existing program data is stored in a second area of the internal memory of the microcomputer (that is, a second area of the second storage unit 822 if the main controllers 412, 422, 432, 442 (see FIG. 6) have the same configuration as the controller of FIG. 5) (step S33). Here, the second area is an area of the internal memory excluding the boot sector and the first area. Alternatively, assuming the entire area of the internal memory excluding the boot sector is divided in half, the second area may be one half to which the first area does not belong. In step S33, the processing unit of the microcomputer may copy the existing program data into a writable area of a nonvolatile memory.

Then, a determination is made as to whether data backup is successful or not (step S34). In step S34, the processing unit determines whether data backup is successful by checking a checksum or by various other methods.

When a determination is made in step S32 that the size of the existing program data exceeds the reference size or when a determination is made in step S34 that data backup is unsuccessful, a determination may be made as to whether there is an external memory outside the microcomputer (step S35). Here, the external memory may be the third storage unit 830 of FIG. 5. In this case, the external memory may be a memory mounted on the same board as the microcomputer. In other words, in step S35, the processing unit of the microcomputer may determine whether there is an additional nonvolatile memory on the board having the microcomputer mounted thereon.

In some embodiments, in step S35, a further determination may be made as to whether there is an external memory in other home appliances connected to the home appliance to be upgraded. For example, in step S35, the main controller 442 (see FIG. 6) of the 1-4^{th} home appliance 440 (see FIG. 6) may also determine whether the 1-1^{st} to 1-3^{rd} home appliances have a nonvolatile memory available for backup of the existing program data.

When a determination is made in step S32 that there is an available external memory, the existing program data is stored in the external memory (step S36).

Then, a determination is made as to whether backup of the existing program to the external memory is successful or not (step S37). Step S37 may be performed in a similar manner to step S34.

When a determination is made in step S34 that the existing program data has been successfully stored in the internal memory of the microcomputer or when a determination is made in step S37 that the existing program data has been successfully stored in the external memory, the processing unit confirms that backup of the existing program data has succeeded (step S38) and may terminate the data backup process.

When a determination is made in step S35 that there is no available external memory or when a determination is made in step S37 that backup of the existing program data to the external memory is unsuccessful, the processing unit confirms that backup of the existing program data has failed (step S39) and may terminate the data backup process.

In some embodiments, the order of the steps of FIG. 8 may be changed. For example, the processing unit may be configured to determine first whether there is an available external memory. Then, when there is an available external memory, the processing unit may back the existing program data stored in the first area of the internal memory up to the external memory and, when there is no available external memory, the processing unit may back the existing program data up to the second area of the internal memory. When there is no available external memory and the size of the existing program data exceeds the reference size, the processing unit may confirm that backup of the existing program data has failed and may terminate the data backup process.

When the electronic device is an air conditioner, the electronic device may include an indoor unit main controller that controls an indoor unit (or an indoor part in the case of an integrated air conditioner), an outdoor unit main controller that controls the overall operation of an outdoor unit (or an outdoor part in the case of an integrated air conditioner), a compressor controller that controls the operation of the compressor, and a motor controller that controls the operation of an outdoor fan. Each of the controllers may include a microcomputer including a processing unit and an internal memory. In addition, each of the indoor unit main controller and the outdoor unit main controller may include an external memory and may need relatively large-sized program data for the operation thereof. Each of the compressor controller and the motor controller may not include an external memory and may need relatively small-sized program data for operation thereof. Accordingly, the processing unit of the microcomputer of each of the indoor unit main controller and the outdoor unit main controller may back existing program data up to the external memory. In contrast, the processing unit of the microcomputer of each of the compressor controller and the motor controller may back existing program data up to the internal memory.

FIG. 9 is a flowchart of operations performed by the electronic device according to one embodiment of the present disclosure, illustrating an exemplary embodiment of the step of performing data rollback (step S24) of FIG. 7. Each step shown in FIG. 7 may be performed by a corresponding one of the main controllers 412, 422, 432, 442 of FIG. 6 (more specifically, the processing unit 821 if the main controllers have the same configuration as the controller 820 of FIG. 5).

First, a checksum of updated new program data may be calculated (step S41).

Then, a determination may be made as to whether the checksum of the new program data is correct or not (step S42).

When a determination is made in step S42 that the checksum of the new program data is not correct, a determination may be made as to whether there is a backup of existing program data (step S43).

When a determination is made in step S43 that there is a backup of the existing program data, data rollback may be performed (step S44). The existing program data backed up to the second area of the internal memory or to the external memory may be copied into the first area of the internal memory to perform data rollback. Alternatively, if the existing program data is in the state of being backed up to the second area of the internal memory, data rollback may be performed by changing the start address upon program execution from a previous one to a start address of the second area.

Then, a determination may be made as to whether data rollback is successful or not (step S45). In step S45, the processing unit may determine whether data rollback is successful by checking a checksum or by various other methods.

When a determination is made in step S42 that the checksum of the new program data is correct or when a determination is made in step S45 that data rollback is successful, the processing unit may terminate the electronic device upgrade process while terminating a boot mode (step S46).

When a determination is made in step S43 that there is no backup of the existing program data or when a determination is made in step S45 that data rollback is unsuccessful, the processing unit may wait in the boot mode without stopping operation of the electronic device (step S47).

In step S47, the main controller 412, 422, 432, or 442 may notify a user that upgrade has not been successfully completed and then may perform the step of executing upgrade (step S23 of FIG. 7) again in response to a user command.

In some embodiments, some of the steps shown in FIG. 8 and FIG. 9 may be omitted.

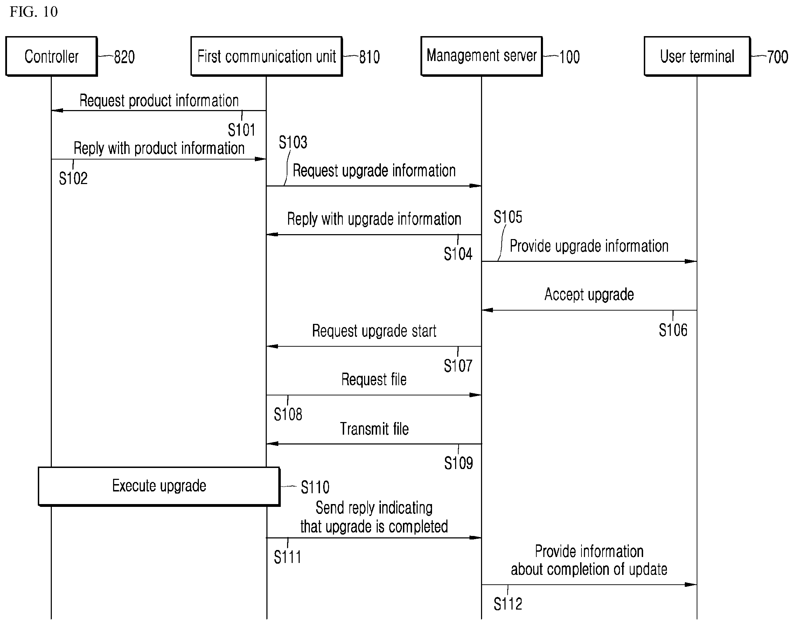

FIG. 10 is a flow diagram illustrating the overall operation of a method for upgrading home appliances according to one embodiment of the present disclosure. The method of FIG. 10 may be used when the general upgrade or the delta upgrade described above is employed.

First, the first communication unit 810 may request home appliance-related information (product information) from the controller 820 (step S101). Here, the product information may be a home appliance identifier. The home appliance identifier may include at least one of a serial number and model name of a corresponding home appliance. In step S101, the management server 100 may request the home appliance-related information from the first communication unit 810 and, in response thereto, the first communication unit 810 may request the home appliance-related information from the controller 820.

Then, in response to the request for product information, the controller 820 may reply to the first communication unit 810 with the home appliance-related information (for example, the home appliance identifier) (step S102).

Then, the first communication unit 810 may request information about whether there are upgrades to be made to the home appliance from the management server 100 (step S103). Here, the first communication unit 810 may transmit the home appliance-related information (for example, the home appliance identifier) to the management server 100. In addition, the first communication unit 810 may further transmit user information to the management server 100. The first communication unit 810 may transmit/receive data to/from the management server 100 through a repeater. Here, the repeater may be the access point of FIG. 2.

Then, the management server 100 may reply to the first communication unit 810 with upgrade information (step S104). Here, the upgrade information may include at least one of information about whether there are upgrades to be made to the corresponding home appliance, which is identified based on the home appliance-related information, and information about the content or details of the upgrades. To this end, the management server 100 may determine whether to upgrade the home appliance. In addition, the management server 100 may determine what upgrade method to use. For example, the management server 100 may determine what upgrade method to use by identifying the details of the upgrades. Examples of upgrade methods may include full upgrade, differential upgrade, and background upgrade.

In addition, the management server 100 may also provide the upgrade information to the user terminal 700 (step S105). The management server 100 may retrieve information about a user of the home appliance from the storage unit 130 (see FIG. 3), or may receive user information from the communication unit 810.

Then, when the user accepts upgrade of the home appliance using the user terminal 700, information about upgrade acceptance may be transmitted from the user terminal 700 to the management server 100 (step S106).

Alternatively, the user may accept upgrade of the home appliance using an input/output unit of the home appliance, instead of using the user terminal 700.

In response to user acceptance of upgrade, the management server 100 may send an upgrade start request to the communication unit 810 (step S107). In some embodiments, the management server 100 may determine what upgrade method to use in this step. How to determine what upgrade method to use will be easily understood by referring to the description of step S104.

In response to the upgrade start request from the management server 100, the first communication unit 810 may send a file transmission request to the management server 100 (step S108).

In response to the file transmission request from the communication unit 810, the management server 100 may transmit a file including data for upgrade of the home appliance to the first communication unit 810 (step S109). Here, the data may include at least one of program data for a most recent version of the home appliance, delta data, and/or a set of instructions.

Then, the first communication unit 810 and the controller 820 may update a program for the home appliance using the file received from the management server 100 (step S110).

When upgrade is completed, the first communication unit 810 may send a reply indicating completion of upgrade to the management server 100 (step S111).

In response to the reply from the first communication unit 810 that indicates completion of upgrade, the management server 100 may provide information about completion of upgrade to the user terminal (step S112).

As described above, the controller 820 of FIG. 10 may be the main controller 412 of FIG. 6 and the first communication unit 810 of FIG. 10 may be the first communication unit 411 of FIG. 6.

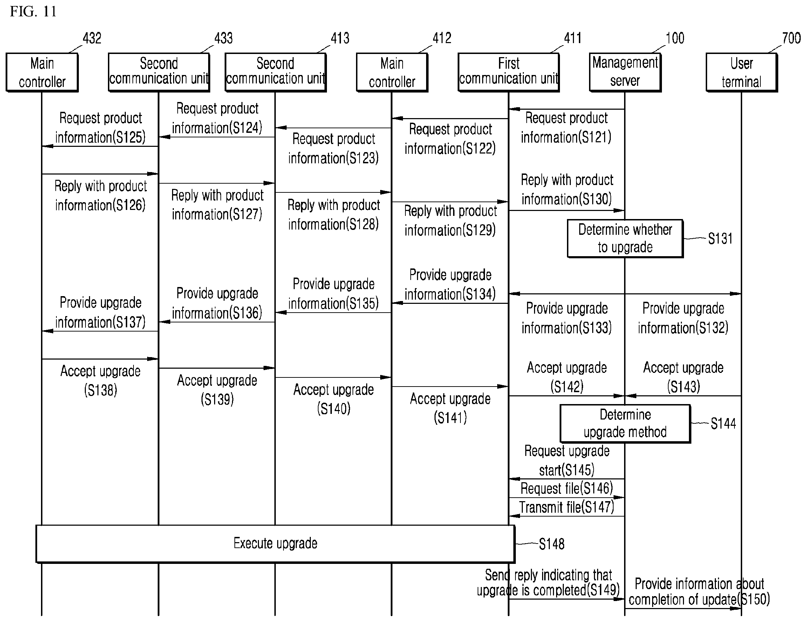

FIG. 11 is a flow diagram illustrating the overall operation of a method for upgrading home appliances according to one embodiment of the present disclosure. The method of FIG. 11 may be used when the general upgrade or the delta upgrade described above is employed.

First, the management server 100 may request information about the 1-3^{rd} home appliance 430 from the first communication unit 411 of the 1-1^{st} home appliance 410 (step S121). Similar to that described in FIG. 10, the information about the 1-3^{rd} home appliance 430 may be an identifier of the 1-3^{rd} home appliance 430. The identifier of the 1-3^{rd} home appliance 430 may include at least one of a serial number and model name of the 1-3^{rd} home appliance 430.

The request for product information transmitted from the management server 100 to the first communication unit 411 may be delivered to the main controller 432 of the 1-3^{rd} home appliance 430 through the main controller 412 of the 1-1^{st} home appliance 410, the second communication unit 413 of the 1-1^{st} home appliance 410, and the second communication unit 433 of the 1-3^{rd} home appliance 430 (steps S122 to S125).

In response to the request for product information, the main controller 432 of the 1-3^{rd} home appliance 430 may reply to the management server 100 with the information about the 1-3^{rd} home appliance (for example, the identifier of the 1-3^{rd} home appliance) through the second communication unit 433 of the 1-3^{rd} home appliance 430, the second communication unit 413 of the 1-1^{st} home appliance 410, the main controller 412 of the 1-1^{st} home appliance 410, and the first communication unit 411 of the 1-1^{st} home appliance 410 (steps S126 to S130).

Then, the management server 100 may reply with the upgrade information described above. More specifically, the management server 100 may provide the upgrade information to the main controller 432 of the 1-3^{rd} home appliance 430 through the first communication unit 411 of the 1-1^{st} home appliance 410, the main controller 412 of the 1-1^{st} home appliance 410, the second communication unit 413 of the 1-1^{st} home appliance 410, and the second communication unit 433 of the 1-3^{rd} home appliance 430 (steps S133 to S137). In addition, the management server 100 may also provide the upgrade information to the user terminal 700 (step S132). The management server 100 may retrieve information about a user of a corresponding home appliance from the storage unit 130 (see FIG. 3), or may receive user information from the first communication unit 411.

Then, the management server 100 may receive an acceptance of upgrade. More specifically, the management server 100 may receive the acceptance of upgrade from the main controller 432 of the 1-3^{rd} home appliance 430 through the second communication unit 433 of the 1-3^{rd} home appliance 430, the second communication unit 413 of the 1-1^{st} home appliance 410, the main controller 412 of the 1-1^{st} home appliance 410, and the first communication unit 411 of the 1-1^{st} home appliance 410. For example, the 1-3^{rd} home appliance 430 may display the upgrade information on a display unit (for example, a display panel or LED) and then may send the acceptance of upgrade to the management server 100 in response to user input received through an input unit (a touchpad, switch, or remote controller). Alternatively, when the user accepts upgrade using the user terminal 700, information about upgrade acceptance may be transmitted from the user terminal 700 to the management server 100 (step S143).

Then, the management server 100 may determine what upgrade method to use (step S144). For example, the management server 100 may determine what upgrade method to use by identifying the details of upgrades to be made. Examples of upgrade methods may include full upgrade, differential upgrade, and background upgrade.

Then, in response to user acceptance of upgrade, the management server 100 may send an upgrade start request to the first communication unit 411 (step S145).

In response to the upgrade start request from the management server 100, the first communication unit 411 may send a file transmission request to the management server 100 (step S146).

In response to the file transmission request from the communication unit 810, the management server 100 may transmit a file including data for upgrade of the corresponding home appliance to the first communication unit 411 (step S147). Here, the upgrade data may include program data for a most recent version of the home appliance, delta data, and/or a set of instructions.

At least one of the first communication unit 411 of the 1-1^{st} home appliance 410, the main controller 412 of the 1-1^{st} home appliance 410, and the second communication unit 413 of the 1-1^{st} home appliance 410, the second communication unit 433 of the 1-3^{rd} home appliance 430, and the main controller 432 of the 1-3^{rd} home appliance 430 may upgrade the home appliance using the received file (step S148). A process of upgrading the home appliance may include at least one of transmitting data and replacing data stored in the home appliance with data in the received file.

In step S148, the first communication unit 411 may transmit the upgrade data when the home appliance does not perform a unique operation thereof. In some embodiments, the first communication unit 411 may transmit the upgrade data after temporarily stopping the unique operation of the home appliance.

When upgrade is completed, the first communication unit 411 may send a reply indicating completion of upgrade to the management server 100 (step S149).

In response to the reply from the first communication unit 411 that indicates completion of upgrade, the management server 100 may provide information about completion of upgrade to the user terminal (step S150).

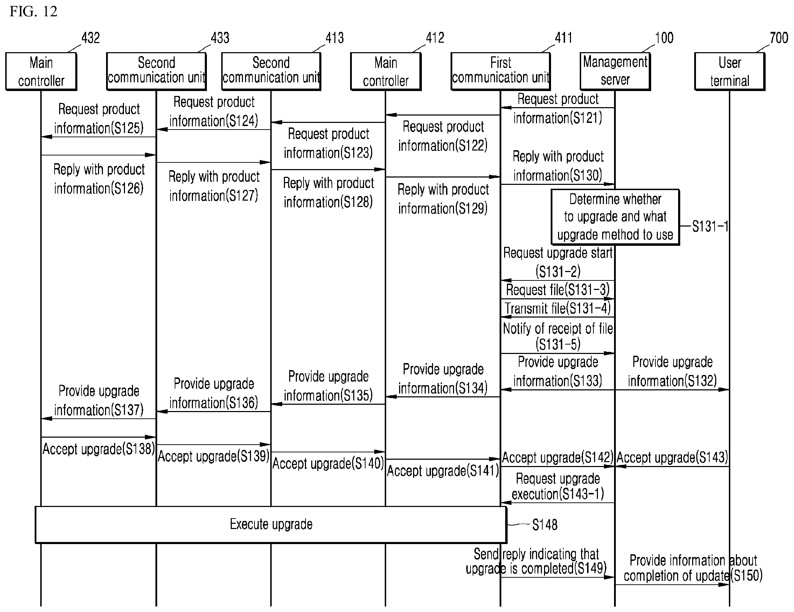

FIG. 12 is a flow diagram illustrating the overall operation of a method for upgrading home appliances according to one embodiment of the present disclosure. The method of FIG. 12 may be used when the automatic upgrade described above is employed.

In FIG. 12, processes indicated by the same reference numerals as in FIG. 11 are the same as those described in FIG. 11. That is, the embodiment shown in FIG. 12 may be substantially the same as that described in FIG. 11 except that data for upgrade of a corresponding home appliance is transmitted to the 1-1^{st} home appliance 410 before receipt of an acceptance of upgrade from a user.

More specifically, when the management server 100 receives home appliance-related information from the 1-3rd home appliance 430, the management server 100 may determine whether to upgrade a corresponding home appliance and what upgrade method to use (step S131-1). Here, step S131-1 may be the same as step S131 and step S144 of FIG. 10.

Then, the management server 100 may send an upgrade start request to the first communication unit 411 (step S131-2). Then, in response to the upgrade start request from the management server 100, the first communication unit 411 may send a file transmission request to the management server 100 (step S131-3). Then, in response to the file transmission request from the first communication unit 411, the management server 100 may transmit a file including data for upgrade of the home appliance to the first communication unit 411 (step S131-4). Here, steps S131-2 to S131-4 may be the same as steps S145 to S147 of FIG. 10, respectively.

Then, in response to user acceptance of upgrade, the management server 100 may send an upgrade execution request to the first communication unit 411. Then, in response to the upgrade execution request from the management server 100, at least one of the first communication unit 411 of the 1-1^{st} home appliance 410, the main controller 412 of the 1-1^{st} home appliance 410, the second communication unit 413 of the 1-1^{st} home appliance 410, the second communication unit 433 of the 1-3^{rd} home appliance 430, and the main controller 432 of the 1-3^{rd} home appliance 430 may upgrade the home appliance using the received file (step S148).

Although FIG. 12 illustrates the case where the upgrade data is transmitted to the 1-1^{st} home appliance 410 before receipt of an acceptance of upgrade from a user, it will be understood that the present disclosure is not limited thereto and the upgrade data may be transmitted to the 1-3^{rd} home appliance 430 before receipt of an acceptance of upgrade from a user.

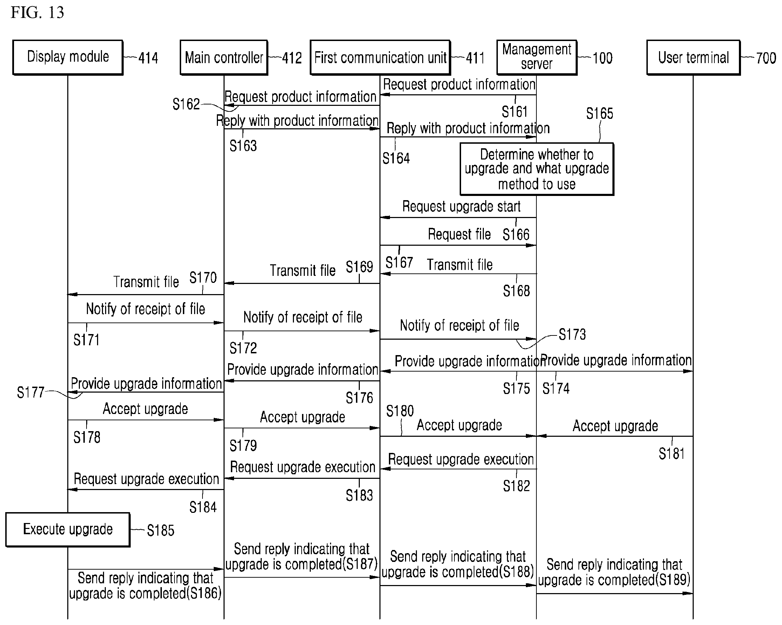

FIG. 13 is a flow diagram illustrating the overall operation of a method for upgrading home appliances according to one embodiment of the present disclosure. The method of FIG. 13 may be used when the automatic upgrade described above is employed.

First, the management server 100 may send a request for product information to the first communication unit 411 of the 1-1^{st} home appliance 410 (step S161).

Then, the first communication unit 411 may transmit the request for product information received from the management server 100 to the main controller 412 (step S162).

Then, in response to the request for product information, the main controller 412 may transmit the product information to the first communication unit 411 (step S163).

Then, the first communication unit 411 may transmit the product information received from the main controller 412 to the management server 100 (step S164).

Then, the management server 100 may determine whether to upgrade a corresponding home appliance and what upgrade method to use (step S165).

Then the management server 100 may send an upgrade start request to the first communication unit 411 (step S166).

Then, in response to the upgrade start request, the first communication unit 411 may send a file transmission request to the management server 100 (step S167).

Then, in response to the file transmission request from the first communication unit 411, the management server 100 may transmit a file including upgrade data to the first communication unit 411 (step S168).

Then, the file transmitted to the first communication unit 411 may be delivered to the display module 414 through the main controller 412 (steps S169 and S170).

When receipt of the file is completed, the display module 414 may transmit a receipt acknowledgement message to the main controller 412 (step S171).

Then, the receipt acknowledgement message received by the main controller 412 may be transmitted to the management server 100 through the first communication unit 411 (steps S172 and S173).

Then, the management server 100 may provide upgrade information. More specifically, the management server 100 may provide the upgrade information to the display module 414 of the 1-1^{st} home appliance through the first communication unit 411 of the 1-1^{st} home appliance 410 and the main controller 412 of the 1-1^{st} home appliance 410 (steps S175 to S177). In addition, the management server 100 may also provide the upgrade information to the user terminal 700 (step S174). The management server 100 may retrieve information about a user of the home appliance from the storage unit 130 (see FIG. 3), or may receive user information from the first communication unit 411.

Then, the management server 100 may receive an acceptance of upgrade. More specifically, the management server 100 may receive an acceptance of upgrade from the display module 414 of the 1-1^{st} home appliance through the main controller 412 of the 1-1^{st} home appliance 410 and the first communication unit 411 of the 1-1^{st} home appliance 410 (steps S178 to S180). Alternatively, if a user accepts upgrade using the user terminal 700, information about upgrade acceptance may be transmitted from the user terminal 700 to the management server 100 (step S181).

Then, in response to user acceptance of upgrade, the management server 100 may send an upgrade execution request to the first communication unit 411 (step S182).

Then, the upgrade execution request received from the management server 100 may be delivered to the display module 414 through the main controller 412 (steps S183 and S184).

Then, in response to the upgrade execution request, the display module 414 may execute an upgrade operation (step S185).

When upgrade is completed, the display module 414 may send a reply indicating completion of upgrade to the management server 100 through the main controller 412 and the first communication unit 411 (steps S186 to S188).

Then, in response to the reply from the first communication unit 411 that indicates completion of upgrade, the management server 100 may provide information about completion of upgrade to the user terminal 700 (step S189).

Although FIG. 13 illustrates the process of upgrading the display module 414 of the 1-1^{st} home appliance 410, upgrade of the voice information module 415 may also be performed in a similar way to that described in FIG. 13. In some embodiments, upgrade of the main controller 412 may also be performed in a similar way to that described in FIG. 13.

In addition, upgrade of the display module or the voice information module of the 1-2^{nd} home appliance 420 or the 1-3^{rd} home appliance 430 may also be performed in a similar way to that described in FIG. 13.

Further, although not shown, upgrade of a specific functional module of the home appliance may also be performed in a similar way to that described in FIG. 13.

Although FIG. 10 to FIG. 13 illustrate that the main controller provides the product information, it will be understood that the present disclosure is not limited thereto and the first communication unit may provide the product information.

Although some exemplary embodiments have been described herein, it should be understood by those skilled in the art that these embodiments are given by way of example only, and that various modifications, variations, and alterations can be made without departing from the scope of the present disclosure. In addition, although advantageous effects provided by a certain configuration are not clearly described in description of the exemplary embodiments, it should be noted that expectable effects of the corresponding configuration should be acknowledged.

## Claims

1. An electronic device comprising:
a main controller (820) comprising a single-chip microcomputer comprising an internal memory, an external memory (830) and a processing unit (821), the internal memory including a boot sector, a first area located right after the boot sector, and a second area different from the first area, the second area being an area of the internal memory excluding the first area and the boot sector; and
a communication unit (810) configured for receiving upgrade data from outside the electronic device,
wherein, when existing program data stored in the first area has a size less than or equal to a reference size, the reference size being less than or equal to half of an entire area of the internal memory excluding the boot sector of the internal memory, the processing unit (821) is configured to:
back up the existing program data stored in the first area to the second area of the internal memory,
confirm that the backup of the existing program data has been performed if the backup of the existing program data to the second area is successful,
back up the existing program data to the external memory if the backup of the existing program data to the second area is unsuccessful,
confirm that the backup of the existing program data has been performed if the backup of the existing program data to the external memory is successful,
confirm that the backup of the existing program data has failed if the backup of the existing program data to the external memory is unsuccessful,
update the existing program data stored in the first area based on the upgrade data after backing up the existing program data to the second area or the external memory, and
wherein, when the process of backing the existing program data stored in the first area up to the second area is unsuccessful or when the existing program data stored in the first area has a size exceeding the reference size, the processing unit (821) is configured to confirm that data backup has failed and to update the existing program data stored in the first area based on the upgrade data.

2. The electronic device according to claim 1, wherein, when the process of updating the existing program data stored in the first area is unsuccessful, the processing unit (821) is configured to perform data rollback based on the existing program data stored in the second area.

3. The electronic device according to any one of the preceding claims, wherein, when the process of updating the existing program data stored in the first area is unsuccessful, the processing unit (821) is configured to wait in a boot mode, if failure of data backup is confirmed or data rollback is unsuccessful.

4. The electronic device according to any one of the preceding claims, wherein, when the process of updating the existing program data stored in the first area is unsuccessful, the processing unit (821) is configured to perform data rollback based on the existing program data stored in the external memory (830).

5. The electronic device according to claim 4, wherein, when the process of updating the existing program data stored in the first area is unsuccessful, the processing unit (821) is configured to wait in a boot mode, if failure of data backup is confirmed or data rollback is unsuccessful.

6. A computer-implemented method for upgrading an electronic device, the electronic device comprising a single-chip microcomputer with an internal memory, an external memory and a processing unit (821), the internal memory including a boot sector, a first area located right after the boot sector, and a second area different from the first area, the second area being an area of the internal memory excluding the first area and the boot sector, the method comprising:
backing up (S33) existing program data stored in the first area to the second area when the existing program data has a size less than or equal to a reference size, the reference size being less than or equal to half of an entire area of the internal memory excluding a boot sector of the internal memory;
confirming (S34) that the backup of the existing program data has been performed if the backup of the existing program data to the second area is successful;
backing up (S36) the existing program data to the external memory if the backup of the existing program data to the second area is unsuccessful;
confirming (S37) that the backup of the existing program data has been performed if the backup of the existing program data to the external memory is successful;
confirming (S39) that the backup of the existing program data has not been performed if the backup of the existing program data to the external memory is unsuccessful; and
updating the existing program stored in the first area based on upgrade data received from outside the electronic device after backing up the existing program data to the second area or the external memory;
wherein the method further comprises:
confirming that data backup has failed when the step of backing the existing program data stored in the first area up to the second area is unsuccessful or when the existing program data stored in the first area has a size exceeding the reference size.

7. The method according to claim 6, further comprising:
performing data rollback based on the existing program data stored in the second area when the step of updating the existing program data is unsuccessful.

8. The method according to claim 6 or 7, further comprising:
backing up the existing program data stored in the first area to an external memory (830) mounted on a board having the microcomputer mounted thereon when the step of backing up the existing program data to the second area is unsuccessful.

## Patentansprüche

1. Elektronische Vorrichtung, die umfasst:
eine Hauptsteuereinheit (820), die einen Einzelchip-Mikrocomputer umfasst, der einen internen Speicher, einen externen Speicher (830) und eine Verarbeitungseinheit (821) umfasst, wobei der interne Speicher einen Boot-Sektor, einen ersten Bereich, der sich gleich hinter dem Boot-Sektor befindet, und einen zweiten Bereich, der von dem ersten Bereich verschieden ist, umfasst, wobei der zweite Bereich ein Bereich des internen Speichers ohne den ersten Bereich und ohne den Boot-Sektor ist; und
eine Kommunikationseinheit (810), die konfiguriert ist, Aufrüstungsdaten von außerhalb der elektronischen Vorrichtung zu empfangen,
wobei dann, wenn vorhandene Programmdaten, die in dem ersten Bereich gespeichert sind, eine Größe aufweisen, die kleiner oder gleich einer Referenzgröße ist, wobei die Referenzgröße kleiner oder gleich einer Hälfte eines gesamten Bereichs des internen Speichers ohne den Boot-Sektor des internen Speichers ist, die Verarbeitungseinheit (821) konfiguriert ist zum:
Sichern der vorhandenen Programmdaten, die in dem ersten Bereich gespeichert sind, in dem zweiten Bereich des internen Speichers,
Bestätigen, dass die Sicherung der vorhandenen Programmdaten ausgeführt wurde, wenn die Sicherung der vorhandenen Programmdaten in dem zweiten Bereich erfolgreich ist,
Sichern der vorhandenen Programmdaten in dem externen Speicher, wenn die Sicherung der vorhandenen Programmdaten in dem zweiten Bereich nicht erfolgreich ist,
Bestätigen, dass die Sicherung der vorhandenen Programmdaten ausgeführt wurde, wenn die Sicherung der vorhandenen Programmdaten in dem externen Speicher erfolgreich ist,
Bestätigen, dass die Sicherung der vorhandenen Programmdaten gescheitert ist, wenn die Sicherung der vorhandenen Programmdaten in dem externen Speicher nicht erfolgreich ist,
Aktualisieren der vorhandenen Programmdaten, die in dem ersten Bereich gespeichert sind, anhand der Aufrüstungsdaten nach dem Sichern der vorhandenen Programmdaten in dem zweiten Bereich oder dem externen Speicher und
wobei dann, wenn der Vorgang des Sicherns der vorhandenen Programmdaten, die in dem ersten Bereich bis zum zweiten Bereich gespeichert sind, nicht erfolgreich ist oder wenn die vorhandenen Programmdaten, die in dem ersten Bereich gespeichert sind, eine Größe aufweisen, die die Referenzgröße übersteigt, die Verarbeitungseinheit (821) konfiguriert ist, zu bestätigen, dass eine Datensicherung gescheitert ist, und die vorhandenen Programmdaten, die in dem ersten Bereich gespeichert sind, anhand der Aufrüstungsdaten zu aktualisieren.

2. Elektronische Vorrichtung nach Anspruch 1, wobei dann, wenn der Vorgang des Aktualisierens der vorhandenen Programmdaten, die in dem ersten Bereich gespeichert sind, nicht erfolgreich ist, die Verarbeitungseinheit (21) konfiguriert ist, eine Datenrückführung anhand der vorhandenen Programmdaten, die in dem zweiten Bereich gespeichert sind, auszuführen.

3. Elektronische Vorrichtung nach einem der vorhergehenden Ansprüche, wobei dann, wenn der Vorgang des Aktualisierens der vorhandenen Programmdaten, die in dem ersten Bereich gespeichert sind, nicht erfolgreich ist, die Verarbeitungseinheit (821) konfiguriert ist, in einer Boot-Betriebsart zu warten, wenn ein Scheitern der Datensicherung bestätigt wird oder eine Datenrückführung nicht erfolgreich ist.

4. Elektronische Vorrichtung nach einem der vorhergehenden Ansprüche, wobei dann, wenn der Vorgang des Aktualisierens der vorhandenen Programmdaten, die in dem ersten Bereich gespeichert sind, nicht erfolgreich ist, die Verarbeitungseinheit (821) konfiguriert ist, eine Datenrückführung anhand der vorhandenen Programmdaten, die in dem externen Speicher (830) gespeichert sind, auszuführen.

5. Elektronische Vorrichtung nach Anspruch 4, wobei dann, wenn der Vorgang des Aktualisierens der vorhandenen Programmdaten, die in dem ersten Bereich gespeichert sind, nicht erfolgreich ist, die Verarbeitungseinheit (821) konfiguriert ist, in einer Boot-Betriebsart zu warten, wenn ein Scheitern einer Datensicherung bestätigt wird oder eine Datenrückführung nicht erfolgreich ist.

6. Computerimplementiertes Verfahren zum Aufrüsten einer elektronischen Vorrichtung, wobei die elektronische Vorrichtung einen Einzelchip-Mikrocomputer mit einem internen Speicher, einem externen Speicher und einer Verarbeitungseinheit (821) umfasst, wobei der interne Speicher einen Boot-Sektor, einen ersten Bereich, der sich gleich hinter dem Boot-Sektor befindet, und einen zweiten Bereich, der von dem ersten Bereich verschieden ist, umfasst, wobei der zweite Bereich ein Bereich des internen Speichers ohne den ersten Bereich und ohne den Boot-Sektor ist, wobei das Verfahren umfasst:
Sichern (S33) vorhandener Programmdaten, die in dem ersten Bereich gespeichert sind, in dem zweiten Bereich, wenn die vorhandenen Programmdaten eine Größe aufweisen, die kleiner oder gleich einer Referenzgröße, wobei die Referenzgröße kleiner oder gleich einer Hälfte eines gesamten Bereichs des internen Speichers ohne den Boot-Sektor des internen Speichers ist;
Bestätigen (S34), dass die Sicherung der vorhandenen Programmdaten ausgeführt wurde, wenn die Sicherung der vorhandenen Programmdaten in dem zweiten Bereich erfolgreich ist;
Sichern (S36) der vorhandenen Programmdaten in dem externen Speicher, wenn die Sicherung der vorhandenen Programmdaten in dem zweiten Bereich nicht erfolgreich ist;
Bestätigen (S37), dass die Sicherung der vorhandenen Programmdaten ausgeführt wurde, wenn die Sicherung der vorhandenen Programmdaten in dem externen Speicher erfolgreich ist;
Bestätigen (S39), dass die Sicherung der vorhandenen Programmdaten nicht ausgeführt wurde, wenn die Sicherung der vorhandenen Programmdaten in dem externen Speicher nicht erfolgreich ist; und
Aktualisieren des vorhandenen Programms, das in dem ersten Bereich gespeichert ist, anhand von Aufrüstungsdaten, die von außerhalb der elektronischen Vorrichtung empfangen werden, nach dem Sichern der vorhandenen Programmdaten in dem zweiten Bereich oder dem externen Speicher;
wobei das Verfahren ferner umfasst:
Bestätigen, dass eine Datensicherung gescheitert ist, wenn der Schritt des Sicherns der vorhandenen Programmdaten, die in dem ersten Bereich bis zum zweiten Bereich gespeichert sind, nicht erfolgreich ist oder wenn die vorhandenen Programmdaten, die in dem ersten Bereich gespeichert sind, eine Größe aufweisen, die die Referenzgröße übersteigt.

7. Verfahren nach Anspruch 6, das ferner umfasst:
Ausführen einer Datenrückführung anhand der vorhandenen Programmdaten, die in dem zweiten Bereich gespeichert sind, wenn der Schritt des Aktualisierens der vorhandenen Programmdaten nicht erfolgreich ist.

8. Verfahren nach Anspruch 6 oder 7, das umfasst:
Sichern der im ersten Bereich gespeicherten Programmdaten in einem externen Speicher (830), der auf einer Karte angebracht ist, auf der der Mikrocomputer angebracht ist, wenn der Schritt des Sicherns der vorhandenen Programmdaten in dem zweiten Bereich nicht erfolgreich ist.

## Revendications

1. Dispositif électronique comportant :
une commande principale (820) comportant un micro-calculateur à une seule puce comportant une mémoire interne, une mémoire externe (830) et une unité de traitement (821), la mémoire interne incluant un secteur d'amorçage, une première zone située juste après le secteur d'amorçage, et une seconde zone différente de la première zone, la seconde zone étant une zone de la mémoire interne excluant la première zone et le secteur d'amorçage ; et
une unité de communication (810) configurée pour recevoir des données de mise à niveau provenant de l'extérieur du dispositif électronique,
dans lequel, lorsque des données de programme existantes stockées dans la première zone ont une taille inférieure ou égale à une taille de référence, la taille de référence étant inférieure ou égale à la moitié d'une zone complète de la mémoire interne à l'exclusion du secteur d'amorçage de la mémoire interne, l'unité de traitement (821) est configurée pour :
sauvegarder les données de programme existantes stockées dans la première zone, dans la seconde zone de la mémoire interne,
confirmer que la sauvegarde des données de programme existantes a été effectuée si la sauvegarde des données de programme existantes dans la seconde zone a réussi,
sauvegarder les données de programme existantes dans la mémoire externe si la sauvegarde des données de programme existantes dans la seconde zone a échoué,
confirmer que la sauvegarde des données de programme existantes a été effectuée si la sauvegarde des données de programme existantes dans la mémoire externe a réussi,
confirmer que la sauvegarde des données de programme existantes a échoué si la sauvegarde des données de programme existantes dans la mémoire externe a échoué,
mettre à jour les données de programme existantes stockées dans la première zone sur la base des données de mise à niveau après la sauvegarde des données de programme existantes dans la seconde zone ou la mémoire externe, et
dans lequel, lorsque le processus de sauvegarde des données de programme existantes stockées dans la première zone dans la seconde zone a échoué ou lorsque les données de programme existantes stockées dans la première zone ont une taille dépassant la taille de référence, l'unité de traitement (821) est configurée pour confirmer que la sauvegarde de données a échoué et pour mettre à jour les données de programme existantes stockées dans la première zone sur la base des données de mise à niveau.

2. Dispositif électronique selon la revendication 1, dans lequel, lorsque le processus de mise à jour des données de programme existantes stockées dans la première zone a échoué, l'unité de traitement (821) est configurée pour effectuer une reprise de données sur la base des données de programme existantes stockées dans la seconde zone.

3. Dispositif électronique selon l'une quelconque des revendications précédentes, dans lequel, lorsque le processus de mise à jour des données de programme existantes stockées dans la première zone a échoué, l'unité de traitement (821) est configurée pour attendre dans un mode d'amorçage, si l'échec de la sauvegarde de données est confirmé ou si la reprise de données a échoué.

4. Dispositif électronique selon l'une quelconque des revendications précédentes, dans lequel, lorsque le processus de mise à jour des données de programme existantes stockées dans la première zone a échoué, l'unité de traitement (821) est configurée pour effectuer une reprise de données sur la base des données de programme existantes stockées dans la mémoire externe (830).

5. Dispositif électronique selon la revendication 4, dans lequel, lorsque le processus de mise à jour des données de programme existantes stockées dans la première zone a échoué, l'unité de traitement (821) est configurée pour attendre dans un mode d'amorçage, si l'échec de la sauvegarde de données est confirmé ou si la reprise de données a échoué.

6. Procédé mis en œuvre par ordinateur pour mettre à niveau un dispositif électronique, le dispositif électronique comportant un micro-calculateur à une seule puce avec une mémoire interne, une mémoire externe et une unité de traitement (821), la mémoire interne incluant un secteur d'amorçage, une première zone située juste après le secteur d'amorçage, et une seconde zone différente de la première zone, la seconde zone étant une zone de la mémoire interne excluant la première zone et le secteur d'amorçage, le procédé comportant de :
sauvegarder (S33) des données de programme existantes stockées dans la première zone, dans la seconde zone lorsque les données de programme existantes ont une taille inférieure ou égale à une taille de référence, la taille de référence étant inférieure ou égale à la moitié d'une zone complète de la mémoire interne à l'exclusion d'un secteur d'amorçage de la mémoire interne ;
confirmer (S34) que la sauvegarde des données de programme existantes a été effectuée si la sauvegarde des données de programme existantes dans la seconde zone a réussi ;
sauvegarder (S36) les données de programme existantes dans la mémoire externe si la sauvegarde des données de programme existantes dans la seconde zone a échoué ;
confirmer (S37) que la sauvegarde des données de programme existantes a été effectuée si la sauvegarde des données de programme existantes dans la mémoire externe a réussi ;
confirmer (S39) que la sauvegarde des données de programme existantes n'a pas été effectuée si la sauvegarde des données de programme existantes dans la mémoire externe a échoué ; et
mettre à jour le programme existant stocké dans la première zone sur la base de données de mise à niveau reçues de l'extérieur du dispositif électronique après la sauvegarde des données de programme existantes dans la seconde zone ou la mémoire externe ;
dans lequel le procédé comporte en outre de :
confirmer que la sauvegarde de données a échoué lorsque l'étape de sauvegarde des données de programme existantes stockées dans la première zone dans la seconde zone a échoué ou lorsque les données de programme existantes stockées dans la première zone ont une taille dépassant la taille de référence.

7. Procédé selon la revendication 6, comportant en outre de :
effectuer une reprise de données sur la base des données de programme existantes stockées dans la seconde zone lorsque l'étape de mise à jour des données de programme existantes a échoué.

8. Procédé selon la revendication 6 ou 7, comportant en outre de :
sauvegarder les données de programme existantes stockées dans la première zone dans une mémoire externe (830) montée sur une carte sur laquelle est monté le micro-calculateur lorsque l'étape de sauvegarde des données de programme existantes dans la seconde zone a échoué.
